# EUROPÄISCHE PATENTSCHRIFT

(11) **EP 3 484 687 B1**
(45) Veröffentlichungstag und Bekanntmachung des Hinweises auf die Patenterteilung: **25.08.2021**
(21) Anmeldenummer: 17745247.1
(22) Anmeldetag: 05.07.2017
(51) Int. Cl.: B29C 45/73, B29C 33/38, B29C 33/76, B29C 33/04, B22D 17/22

(54) **FORMKERN-TEMPERIERSYSTEM ZUM HERSTELLEN VON NICHTZYLINDRISCHEN FORMTEILEN**
MOLD CORE TEMPERATURE-CONTROL SYSTEM FOR PRODUCING NON-CYLINDRICAL MOLDED PARTS
SYSTÈME DE THERMORÉGULATION DE NOYAU DE MOULE POUR RÉALISER DES PIÈCES MOULÉES NON CYLINDRIQUES

(30) Priorität: 15.07.2016 DE 202016103853 U
(43) Veröffentlichungstag der Anmeldung: 22.05.2019
(73) Patentinhaber: Budde, Peter, 58579 Schalksmühle (DE)
(72) Erfinder: Budde, Peter, 58579 Schalksmühle (DE)
(74) Vertreter: Heitzer, Christian Michael
(86) Internationale Anmeldenummer: PCT/DE2017/100562
(87) Internationale Veröffentlichungsnummer: WO 2018/010724

(56) Entgegenhaltungen:
- EP-A1- 1 950 020
- DE-A1- 19 854 057
- GB-A- 2 362 156
- JP-A- H0 275 440
- US-A1- 2005 133 962
- US-A1- 2007 065 536
- US-A1- 2010 108 638

## Beschreibung

### 1. Technisches Gebiet

Die Erfindung betrifft ein Formkern-Temperiersystem in Werkzeugen zum Herstellen von im Wesentlichen nichtzylindrischen Formteilen.

### 2. Stand der Technik

Formteile werden häufig im Spritzguss- oder Druckgussverfahren hergestellt. Zur Herstellung werden Metallformen benötigt, die einen Formkern, der die Innenform des herzustellenden Formteils bildet, und einen Formeinsatz, der das Negativ der Außenform des herzustellenden Formteils bildet, umfassen. Der Formkern und der Formeinsatz bilden gemeinsam einen Hohlraum, der auch als Kavität bezeichnet wird, aus, in dem eine Formmasse eingespritzt bzw. eingepresst werden kann. Zur rationellen Herstellung von Formteilen werden oft Formen benutzt, die mehrere Kavitäten und eine entsprechende Anzahl an Formkernen umfassen, die auf einer gemeinsamen Platte angeordnet sind.

Der fertige Formkern wird in Spritzgießmaschinen eingesetzt, wobei die äußere Formfläche des Schaftendes mit einem Gegenwerkzeug einer Maschinenhälfte, dem so genannten Formeinsatz, eine Kavität bildet, also den geometrischen Raum, der die negative Entsprechung des fertigen Spritzgießteils ist. Die Spritzgießmaschine spritzt die aufbereitete Kunststoffmasse unter hohem Druck und hoher Temperatur in einer bestimmten Zeit in die Kavität.

Daraufhin erfolgt eine Abkühlung der geformten Kunststoffmasse, wodurch der Kunststoff erstarrt und das fertige Spritzgießteil, das auch Formteil genannt wird, gebildet wird. Die von der Formmasse beim Erstarren abgegebene Wärme wird unter anderem über den Formkern-Innenkern abgeführt.

Der thermodynamische Prozess in der Kavität des Spritzgießwerkzeuges bestimmt die Zykluszeit und die Qualität der herzustellenden Spritzgießteile. Ein optimaler thermodynamischer Prozess ist dann erreicht, wenn alle Zustandsgrößen und Verfahrensparameter in dem gesamten Bereich der Kavität optimale Prozessbedingungen erreichen.

Der thermodynamische Prozess wird durch die Zustandsgrößen Druck(p), spezifisches Volumen (V) und Temperatur (T) gebildet und durch das p-V-T-Diagramm funktionell erfasst und mathematisch beschrieben.

In der Praxis lassen sich die p-V-T-Diagramme für jeden Kunststoff experimentell ermitteln. Anhand dieser Zustandsgrößen lässt sich der zu erwartende Spritzgießprozess gut beschreiben, vorausgesetzt, in allen Bereichen der Kavität herrscht durch eine gleichmäßig verteilte Werkzeugwandoberflächentemperatur eine gleichmäßige Abkühlgeschwindigkeit.

Das kann dann in der Praxis zur Konsequenz haben, dass bei einer Zykluszeit, die um 30 Prozent gegenüber einem konventionellen Spritzgießwerkzeug reduziert wurde, nur mit einer reduzierten Zykluszeit zwischen 20 und 25 Prozent produziert wird, um durch den längeren Nachdruck eine optimale Kristallisation und damit höchste Formteilqualität zu erreichen.

Aus der deutschen Patentanmeldung DE 10 2004 022 306 ist bekannt, Mittel zur homogenen Ableitung der Wärme vorzusehen, wodurch die Qualität des Spritzgießteils bzw. des Formteils aufgrund der gleichmäßigeren Materialabkühlung wesentlich erhöht wird.

Es ist ferner vorgesehen, dass das Schaftende aus Kupfer oder einer kupferhaltigen Legierung gefertigt ist. Die Wärmeleitfähigkeit von Kupfer oder kupferhaltigen Legierungen ist im Vergleich zu Werkzeugstählen wesentlich höher und beträgt dort vorzugsweise zwischen 130 und 260 W/mK. Diese Maßnahme beschleunigt den Abtransport von Wärme aus der Kavität, was wiederum zu einer Erhöhung der Produktionsleistung führt.

Es wurde als zweckmäßig vorgeschlagen, dass als Mittel zur Ableitung von Wärmemengen aus dem Schaftende mindestens eine Wärmeableitung im oder am Schaft vorzugsweise zumindest teilweise entlang des Schaftes vorgesehen ist, wobei die Wärmeableitung mit dem Schaftende mindestens eine Wärmeaustauschfläche aufweist. Die Wärme wird entlang des Schaftes abtransportiert, was zu einer beschleunigten Abkühlung des Schaftendes führt. Je größer die Wärmeaustauschfläche ausgebildet ist, desto schneller erfolgt der Wärmeaustausch.

In der deutschen Patentanmeldung DE 10 2013 100 277 werden Mittel zum Kühlen eines Formwerkzeuges vorgeschlagen. Eine Formschmelze, die in Formhohlräume eingebracht werden soll, soll zum Verfestigen gekühlt werden. Der Abkühlvorgang soll einerseits zur Verkürzung der Zykluszeiten so schnell wie möglich erfolgen, andererseits muss gewährleistet werden, dass die Formschmelze in alle Formhohlräume eindringt. Zum Kühlen der Formschmelze werden Kühlkanäle vorgesehen.

Die qualitativen Anforderungen an thermoplastische Kunststoffteile, die durch Spritzgießen hergestellt werden, sind hoch und äußerst vielschichtig. Sowohl technische Teile als auch Erzeugnisse für die Konsumindustrie müssen sehr hohe Qualitätsansprüche erfüllen. Sie müssen über die gesamte Zeit der Verwendung höchste Maßhaltigkeit gewährleisten, keine Risse bilden und es dürfen nach dem Spritzgießprozess keine Teileverwerfungen durch partielles Nachschrumpfen auftreten; alle Spritzgießteile müssen eine hohe Formteilqualität aufweisen.

Um eine wirtschaftliche Herstellung zu ermöglichen, muss die Produktionszeit, also die Zykluszeit, so kurz wie möglich gehalten werden und sowohl Unikate wie auch Großserien müssen in gleichbleibender hoher Qualität wirtschaftlich herstellbar sein.

Die Anforderungen, die an den Spritzgießprozess gestellt werden, wie hohe Wirtschaftlichkeit der Produktion, hohe Formteilqualität und hohe Standzeit und Lebensdauer der Werkzeugkomponenten können nur dann realisiert werden, wenn die Spritzgießwerkzeuge konstruktiv so konzipiert werden, dass eine optimale Kristallisation des Kunststoffes bei kurzer Zykluszeit erreicht wird, ohne dass dabei erhöhter Verschleiß an den Werkzeugkomponenten auftritt.

Während für die Kristallisation der Thermoplaste dem Verarbeitungsprozess Wärme entzogen werden muss, muss für die Verarbeitung von Duroplaste dem Verarbeitungsprozess Wärme zugeführt werden. Ansonsten sind alle prozessualen Anforderungen mit der Verarbeitung von Thermoplaste vergleichbar.

Bei der Herstellung nichtzylindrischer Bauteile treten in Bezug auf eine virtuelle Mittelachse bzw. Polarkoordinatenachse oder auch Schnittebene unsymmetrische Temperaturverteilungen auf. Dies führt zu ungleichmäßigen Abkühl- und/oder Kristallisationsverläufen nach dem Abspritzen. Dadurch entstehen ungleichmäßige Strukturen im Formteil mit unerwünschten unregelmäßigen Materialeigenschaften wie Härte, Zähigkeit, Farbstruktur und/oder Oberflächenbeschaffenheit.

EP 1 950 020 A1 beschreibt eine Form, die die Übertragbarkeit der Oberfläche eines geformten Produkts verbessern und das Herausnehmen des geformten Produkts unmittelbar nach dem Erstarren ermöglichen kann, wodurch der Formzyklus beschleunigt werden kann. In der Form sind sowohl eine stationäre Seitenform als auch eine bewegliche Seitenform in Mastern montiert, und auf einer Freigabeseite ist eine Hohlraumfläche ausgebildet.

US 2007 065 536 A1 beschreibt eine Kühlvorrichtung für Formen in einer Spritzgießmaschine, die einen Rotationskühlkopf umfasst, der in dem männlichen Formteil angeordnet ist. Der Kühlkopf stellt mehrere Farbformsätze bereit, wobei eine Welle an einem Ende der Mitte des Kühlkopfs angeordnet ist, um mit Kühlflüssigkeit durchgeleitet zu werden. Der Kühlkopf wird von einem Zahnrad mit Zahnstange angetrieben, um die Farbformsätze zu drehen. Die Flüssigkeit bewegt sich entlang des Ansaugrohrs und der Durchgänge in der Mitte des Kühlkopfs, um die Zirkulation der Kühlflüssigkeit zu steuern.

JP H02 75440A beschreibt einen Düsenschaft mit einer komplexen Führung eines Kühlwasserkanals innerhalb des Düsenschafts, welche durch Unterteilung des Schaftes und Gravieren eines Kühlwasserkanals in jeden Teil des Schaftes erzeugt werden soll.

### 3. Aufgabenstellung

Der Erfindung liegt die Aufgabe zugrunde, ein Kühl-/Temperiersystem in Werkzeugen für die Herstellung von nichtzylindrischen Bauteilen bereitzustellen, welches eine möglichst homogene Temperaturverteilung an der Kavität und im Formteil beim Abspritz- und Abkühlvorgang erzielt und mit welchen insbesondere die Nachteile des Standes der Technik überwunden werden können.

Es ist ferner Aufgabe der Erfindung ein Verfahren bereitzustellen, mit welchem eine gegenüber dem Stand der Technik zeitlich optimierte Herstellung von Formteilen ermöglicht wird.

### 4. Zusammenfassung der Erfindung

Ein nichtzylindrischer Formkern im Sinne dieser Erfindung ist ein Formkern, der um eine virtuelle Drehachse im Bereich einer Kavität im Wesentlichen nicht zylindrisch aufgebaut ist. Eine virtuelle Drehachse verläuft dabei parallel zum Richtungsvektor VE der Entformungsrichtung bei der Trennung des Formkerns vom Formeinsatz des Werkzeugs. Der so aufgebaute nichtzylindrische Formkern weist wenigstens zwei in definiertem Winkel zueinanderstehende Seitenwände und wenigstens einen Eckbereich auf.

Ein Temperiermittel operiert im Sinne dieser Erfindung entweder als Kühl- oder Erwärmungsmedium.

Die vorliegende Erfindung löst die Aufgabe durch einen Formkern mit den Merkmalen des unabhängigen Anspruches 1 oder durch ein Verfahren unter Benutzung eines Formkerns mit den Merkmalen des unabhängigen Anspruches 1. Bevorzugte und/oder optionale Ausführungsformen finden sich in den abhängigen Ansprüchen.

Der nichtzylindrische Formkern weist Temperiermittelkanäle auf, wobei das Temperiermittel über einen innenliegenden Strömungskanal, wenigstens einen verteilenden Strömungskanal als Strömungsfläche der Formkontur innerhalb des Endbereichs des Formkerns und wenigstens einen Strömungskanal innerhalb der Formkontur entlang eines Eckbereichs und /oder einer Seitenwand führbar ist.

In einem ersten Ausführungsbeispiel weist der nichtzylindrische Formkern Temperiermittelkanäle auf, wobei die Zufuhr des Temperiermittels über wenigstens einen innenliegenden Strömungskanal erfolgt, über wenigstens einen verteilenden Strömungskanal als Strömungsfläche der Formkontur innerhalb des Endbereichs des Formkerns abgelenkt wird und im Inneren der Formkontur über wenigstens einen Strömungskanal entlang wenigstens einer der Seitenwände und/oder über wenigstens einen Strömungskanal entlang wenigstens eines Eckbereichs zurückgeführt wird.

In einem weiteren Ausführungsbeispiel weist der nichtzylindrische Formkern Temperiermittelkanäle auf, wobei die Zufuhr des Temperiermittels über wenigstens einen innenliegenden Strömungskanal und/oder über wenigstens einen entlang wenigstens einer der Seitenwände liegenden Strömungskanal erfolgt, innerhalb des Endbereichs des Formkerns über wenigstens einen verteilenden Strömungskanal als Strömungsfläche der Formkontur abgelenkt wird und über wenigstens einen Strömungskanal entlang wenigstens eines Eckbereichs zurückgeführt wird.

In einem weiteren Ausführungsbeispiel weist der nichtzylindrische Formkern Temperiermittelkanäle auf, wobei die Zufuhr des Temperiermittels über wenigstens einen innenliegenden Strömungskanal und/oder wenigstens einen Strömungskanal entlang wenigstens eines Eckbereichs erfolgt, innerhalb des Endbereichs des Formkerns über wenigstens einen verteilenden Strömungskanal als Strömungsfläche der Formkontur abgelenkt wird und über wenigstens einen entlang wenigstens einer der Seitenwände liegenden Strömungskanal zurückgeführt wird.

In einem weiteren Ausführungsbeispiel weist der nichtzylindrische Formkern Temperiermittelkanäle auf, wobei die Zufuhr des Temperiermittels über wenigstens einen Strömungskanal entlang wenigstens eines Eckbereichs und/oder über wenigstens einen entlang wenigstens einer der Seitenwände liegenden Strömungskanal erfolgt, innerhalb des Endbereichs des Formkerns über wenigstens einen verteilenden Strömungskanal als Strömungsfläche der Formkontur abgelenkt wird und über wenigstens einen innenliegenden Strömungskanal zurückgeführt wird.

In einem weiteren Ausführungsbeispiel weist der nichtzylindrische Formkern Temperiermittelkanäle auf, wobei die Zufuhr des Temperiermittels über wenigstens einen Strömungskanal entlang wenigstens eines Eckbereichs erfolgt, innerhalb des Endbereichs des Formkerns über wenigstens einen verteilenden Strömungskanal als Strömungsfläche der Formkontur abgelenkt wird und über wenigstens einen innenliegenden Strömungskanal und/oder über wenigstens einen entlang wenigstens einer der Seitenwände liegenden Strömungskanal zurückgeführt wird.

In einem weiteren Ausführungsbeispiel weist der nichtzylindrische Formkern Temperiermittelkanäle auf, wobei die Zufuhr des Temperiermittels über wenigstens einen entlang wenigstens einer der Seitenwände liegenden Strömungskanal erfolgt, innerhalb des Endbereichs des Formkerns über wenigstens einen verteilenden Strömungskanal als Strömungsfläche der Formkontur abgelenkt wird und über wenigstens einen innenliegenden Strömungskanal und/oder wenigstens einen Strömungskanal entlang wenigstens eines Eckbereichs zurückgeführt wird.

Durch die Konzeption eines nichtzylindrischen Formkerns mit auf diese Weise konturnah angeordneten Temperiermittelkanälen und entsprechender Strömungsführung des Temperiermittels wird es ermöglicht, die Innenflächen der Formkontur im gesamten Bereich der Kavität strömungstechnisch optimal, sicher und prozessorientiert zu kühlen bzw. zu erwärmen, dergestalt, dass das Kühl-/Erwärmungsmedium bevorzugt zentral aber auch in Eck-/Seitenbereichen zugeführt und /oder zentral aber auch in Eck- oder Seitenbereichen abgeführt wird.

Dabei wird sichergestellt, dass das Temperiermittel, welches entweder als Kühl- oder Erwärmungsrmedium operiert entsprechend den Anforderungen des Herstellungsprozesses durch auf der Innenfläche der Formkontur und/oder dem Innenkern positionierte Strömungslenker an der Innenfläche der Formkontur des Formkerns gleichmäßig strömend verteilt und in ausreichenden Mengen sicher den Eck- und Seitenbereichen zu- oder abgeführt und über diese dem zentralen Strömungskanal im Innenkern und/oder Formkern zentral und/oder Eck-/Seitenbereichen zu- oder abgeführt wird.

Vorteilhaft kann der Formkern konstruktiv als normbare Paket-Einheit (oder Kühlungs-/Erwärmungs Einheit) ausgestaltet werden. Für Großformen können, je nach Bedarf, mehrere genormte Paket-Einheiten als Kühl- /Erwärmungssystem parallel oder hintereinander angeordnet werden.

Der Bereich der Formkontur, der die Kavität bildet, kann durch diese Konstruktion dünnwandig gestaltet werden. Dadurch wird die Wärmeleitung von der Kavität zum Temperiermittel des Formkerns optimiert und gleichzeitig eine über den gesamten Bereich des Formkerns weitgehend gleichmäßig verteilte Werkzeugwandtemperatur für einen optimalen Produktionsprozess sichergestellt.

Für die Verarbeitung von Duroplasten kann beispielsweise der Bereich des Formkerns, der die Kavität bildet, beheizt werden.

Vorteilhaft umfasst bei einem nichtzylindrischen Formkern gemäß diesen Ausführungsbeispielen für den Einsatz im Spritzgießprozess, bei welchem die Werkstücke aus ungefüllten Thermoplasten hergestellt werden, die Formkontur im Bereich der Kavität Kupferlegierungen mit hoher Wärmeleitfähigkeit.

Wenn gefüllte Thermoplaste verarbeitet werden, umfasst ein nichtzylindrischer Formkern gemäß diesen Ausführungsbeispielen vorteilhaft Kupferlegierungen mit hoher Wärmeleitfähigkeit und mit verschleißmindernden Oberflächenbeschichtungen.

Vorteilhaft umfasst bei einem nichtzylindrischen Formkern gemäß diesen Ausführungsbeispielen für den Einsatz im Spritzgießprozess zur Herstellung von Formteilen für die Medizintechnik korrosionsbeständigen Werkzeugstahl.

Vorteilhaft umfasst bei einem nichtzylindrischen Formkern gemäß diesen Ausführungsbeispielen für den Einsatz im Druckgussprozess gehärteten Werkzeugstahl.

Die Formkontur des nichtzylindrischen Formkerns umfasst gemäß diesen Ausführungsbeispielen vorteilhaft Kupferlegierungen und/oder Werkzeugstähle und/oder Titan und/oder Ingenieurkeramik, die gegebenenfalls über geeignete Fügeverfahren gefügt sind, mit oder ohne verschleißmindernden Oberflächenbeschichtungen.

Geeignete Fügeverfahren für gleiche oder unterschiedliche Materialien sind beispielsweise
Lichtbogenschweißen,
WIG/MAG-Schweißen,
Reibschweißen,
Explosions-Mag na-Flash-Schweißen,
Diffusionsschweißen,
Laserschweißen,
Lasersintern,
Elektronenstrahlschweißen,
Hartlöten im Vakuum,
Kalteinsenken und
Verschraubungen
Verkleben.

Die kurze Zykluszeit bei gleichbleibend hoher homogener (Kristallisations-) Qualität und hoher mechanischer Stabilität wird erreicht, wenn für die Werkstoffe, die die Kavität bilden, Legierungen mit hoher Wärmeleitfähigkeit wie z. B. hochwertige Kupferlegierungen oder Hartsilber oder kohlenstoffhaltiges Material wie kohlenstofffaserverstärkter Kunststoff, Carbon oder vorwiegend carbonhaltiger Werkstoff verwendet werden, um einen optimalen thermodynamischen Prozess zu erzielen.

Eine optimale Kristallisation wird erfindungsgemäß erreicht, indem alle Werkzeugbereiche, die die Kavität bilden, eine gleichmäßig verteilte und über die gesamte Dauer des Spritzgießprozesses auch eine gleichmäßig verlaufende Werkzeugwandtemperatur, sowie Gleiteigenschaften und innerhalb der Kavität ein möglichst geringes und/oder ein möglichst homogenes Magnetfeld über die gesamte Werkzeugoberfläche der Werkzeugbereiche, die die Kavität bilden gewährleisten.

Vorteilhaft werden dabei Werkstoffe mit hoher bis höchster Wärmeleitung verwendet, werden die Kühlung bzw. Temperierung der Kavität konturnah angebracht, die Oberfläche, die für den Wärmetransport im Kühl- /Temperierbereich maßgebend ist, wird so groß wie nur möglich, aber je nach Lage in der Kavität und je nach prozessualen Anforderungen, in der Größe variabel ausgelegt. Bei der Anordnung der Strömungskanäle wird die Wanddicke für den Wärmeübergang konstruktiv vorteilhaft dünn gestaltet. Weiterhin vorteilhaft werden in wenigstens einem Strömungskanal Strömungslenker vorgesehen, die im Strömungsbereich eine turbulente Strömung des Kühl-/Temperiermittels erzeugen.

Vorteilhaft ist das Temperiersystem im Bereich der Kavität konstruktiv konturnah und dünnwandig ausgeführt, um eine optimale Wärmeleitung von der Kavität zum Temperiermittel zu gewährleisten. Optional umfasst das Temperiersystem Strömungslenker, die gleichzeitig als kraftübertragende Stützen dienen, um die auftretenden dynamischen und statischen Kräfte sicher über den Innenkern abzustützen und auf den Formkernschaft übertragen.

Der Innenkern des nichtzylindrischen Formkerns umfasst vorteilhaft eine gehärtete Stahllegierung, um die punktuell auftretenden Kräfte ohne Verformung/Einsinken aufzunehmen und auf den Formkernschaft sicher zu übertragen.

Der Formkernschaft des nichtzylindrischen Formkerns umfasst vorteilhaft Werkzeugstahl.

Durch die an einem nichtzylindrischen Formkern erfindungsgemäße Ausgestaltung von Strömungskanälen für ein Temperiermittel, durch eine geeignete Auswahl von Werkstoffverbindungen für den nichtzylindrischen Formkern, deren Härte- Oberflächen- und Gleiteigenschaften, der optional mit einer geeigneten Fügetechnik unter Berücksichtigung von definierten, an die ausgewählten Werkstoffverbindungen angepasst vorbereitete Geometrie der Fügeübergänge, unter Beachtung definierter Fügeprozessschritte hergestellte nichtzylindrische Formkern mit definierten Materialabständen im Bereich der Kavität wird vorteilhaft gleichzeitig eine gleichmäßige Temperierung mit qualitativ hochwertigen Formteilen, eine effiziente Temperierung mit hoher Taktrate beim Spritzprozess und hohe Abriebfestigkeit des Formkerns mit hohen Standzeiten erzielt.

Der Fachmann erkennt, dass eine Vielzahl von Kombinationsmöglichkeiten der einzelnen Komponenten, deren Werkstoffzusammensetzungen, der Fügetechniken, der Oberflächenbehandlungen und der geometrischen Ausbildungen möglich und entsprechend den gestellten Anforderungen konzipierbar sind.

Zur Herstellung von Formteilen mithilfe eines erfindungsgemäßen Formkerns werden folgende Verfahrensschritte vorgeschlagen:
- Einbringen eines flüssigen oder fließfähigen Formmaterials in eine Kavität, umfassend einen erfindungsgemäßen Formkern, zur Erzeugung eines Formteils
- Abwarten der Kristallisation des Formteils in der Kavität unter Bereitstellung von Wärmemenge an die Kavität oder unter Entzug von Wärmemenge aus der Kavität über den Innenkern und/oder den Formkernschaft des Formkerns,
- Auswerfen des Formteils aus der Kavität und Entfernen des Formteils vom Formkern.

Der Fachmann erkennt ferner, dass beispielsweise für erfindungsgemäß gestaltete nichtzylindrische Formkerne der Einsatz insbesondere in nachfolgenden Fachgebieten möglich ist:
i) Kunststoffindustrie,
ii) Druckgießindustrie und
iii) Maschinenbau.

### 5. Kurze Beschreibung der begleitenden Figuren

In der Folge werden anhand von Figuren Ausführungsbeispiele der Erfindung beschrieben. Diese Figuren zeigen:
- Fig. 1: die Vorderansicht eines nichtzylindrischen Formkerns in der Schnittebene x-x;
- Fig. 2: die Draufsicht des Beispiels aus Fig. 1 eines nichtzylindrischen Formkerns in der Schnittebene z-z; und
- Fig. 3: die Seitenansicht des Beispiels aus Fig. 1 eines nichtzylindrischen Formkerns in der Schnittebene y-y.

### 6. Detaillierte Beschreibung bevorzugter Ausführungsbeispiele

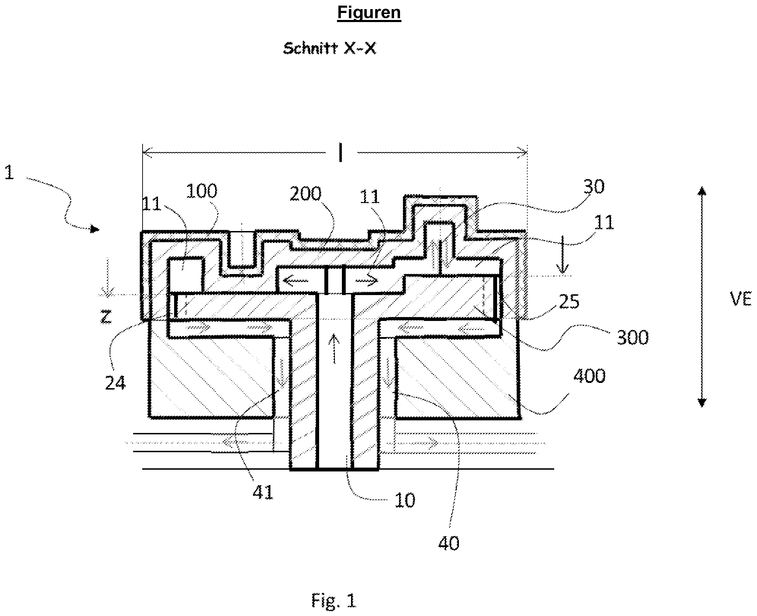

Fig. 1 zeigt die Vorderansicht eines nichtzylindrischen Formkerns in der Schnittebene x-x. In dem in Fig. 1 gezeigten Ausführungsbeispiel weist ein nichtzylindrischer Formkern 1 Strömungskanäle 10, 11, 24, 25, 40, 41 zum Transport eines Temperiermittels auf. Ferner ist ein Formteil 100 dargestellt, welches sich in einer Kavität (nicht dargestellt) aus dem in die Kavität eingespritzten Material ausbildet. Die Kavität wird zusammen mit einem Formeinsatz eines Werkzeugs (nicht dargestellt) gebildet. Fig. 1 zeigt ferner eine Formkontur 200 des Formkerns 1, deren Außenfläche die Innenfläche des Formteils 100 bildet. Im Inneren der Formkontur 200 des Formkerns 1 sind Strömungskanäle 10, 11, 24, 25, 40, 41 zum Transport des Temperiermittels angeordnet. Im Inneren des Formkerns 1 ist innerhalb der Formkontur 200 ein Innenkern 300 mit Ausnahme der Strömungskanäle formschlüssig und dicht angeordnet. Den Abschluss des Formkerns 1 bildet ein Formkernschaft 400, welcher an die Formkernkontur formschlüssig und dicht anschließt und den Innenkern 300 teilweise umschließt. Die Zufuhr des Temperiermittels erfolgt in diesem Beispiel über einen innenliegenden Strömungskanal 10. Das Temperiermittel wird über verteilende Strömungskanäle 11 als Strömungsfläche der Formkontur 200 innerhalb des Endbereichs des Formkerns 1 abgelenkt wird und im Inneren der Formkontur 200 des Formkerns 1 über Strömungskanäle 24, 25 entlang der Seitenwände zurückgeführt und über die außenliegenden Strömungskanäle 40, 41 abgeführt. Zur Optimierung der Strömung und zur bedarfsweisen Verwirbelung des Temperiermittels können wie in diesem Beispiel dargestellt Strömungslenker an definierten Stellen in den Strömungskanälen angeordnet sein. Diese verbessern die gleichmäßige Temperaturverteilung innerhalb der Formkontur 200 des Formkerns 1 und erhöhen durch Verwirbelung die Effizienz der Wärmeübertragung zwischen dem Temperiermittel und der Formkontur 200 des Formkerns 1. Dadurch wird ein gleichmäßiger und effizienter Wärmeaustausch zwischen einem Formteil 100 und der Formkontur 200 des Formkerns 1 zusätzlich unterstützt.

VE ist der Richtungsvektor der Entformungsrichtung bei der Trennung des Formkerns vom Formeinsatz des Werkzeugs.

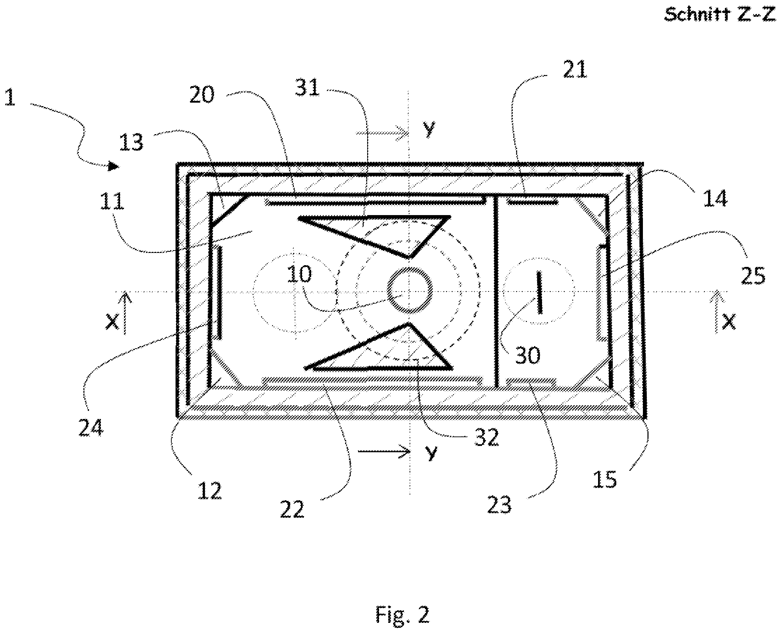

Fig. 2 zeigt die Draufsicht des Beispiels aus Fig. 1 eines nichtzylindrischen Formkerns in der Schnittebene z-z. In dieser Ansicht sind zusätzlich zu den Strömungskanälen 24, 25 Strömungskanäle 20, 21, 22 und 23 dargestellt, welche entlang der Seitenwände nach unten führen. Ferner zeigt diese Darstellung die in den Eckbereichen angeordneten Strömungskanäle 12, 13, 14 und 15, welche in den Eckbereichen entlang der Seitenwände nach unten führen und das Temperiermittel über die Strömungskanäle 40, 41 (in Fig. 1. Dargestellt) abführen. Fig. 2 zeigt beispielhaft eine Anordnung von strömungslenkenden Stützen 31 und 32, welche die auftretenden dynamischen und statischen Kräfte über den Innenkern 300 abstützen und auf den Formkernschaft 400 übertragen.

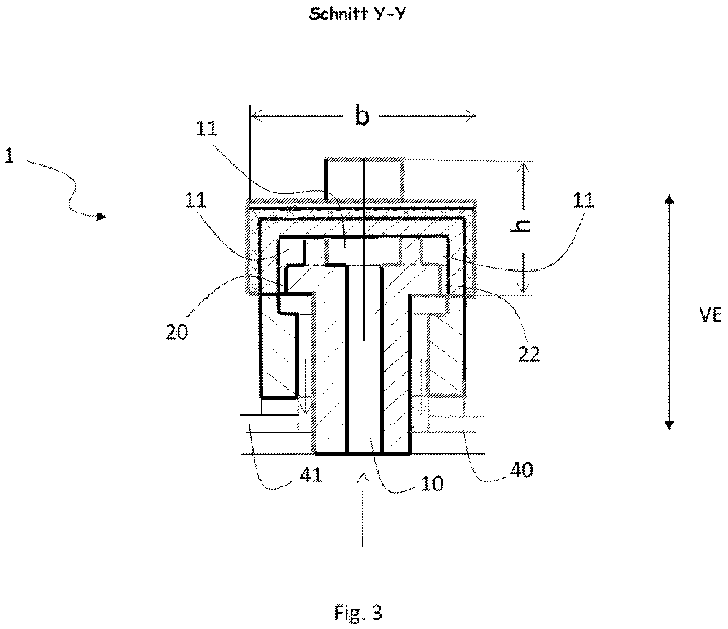

Fig. 3 zeigt die Seitenansicht des Beispiels aus Fig. 1 eines nichtzylindrischen Formkerns in der Schnittebene y-y.

VE ist der Richtungsvektor der Entformungsrichtung bei der Trennung des Formkerns vom Formeinsatz des Werkzeugs.

Zur Herstellung von Formteilen 100 mithilfe eines erfindungsgemäßen Formkerns 1 werden folgende Verfahrensschritte vorgeschlagen:
- Einbringen eines flüssigen oder fließfähigen Formmaterials in eine Kavität, umfassend einen erfindungsgemäßen Formkern 1, zur Erzeugung eines Formteils 100
- Abwarten der Kristallisation des Formteils 100 in der Kavität unter Bereitstellung von Wärmemenge an die Kavität oder unter Entzug von Wärmemenge aus der Kavität über den Innenkern 300 und/oder den Formkernschaft 400 des Formkerns 1,
- Auswerfen des Formteils 100 aus der Kavität und Entfernen des Formteils 100 vom Formkern 1.

### Liste der verwendeten Bezugszeichen:

- 1: nichtzylindrischer Formkern
- 10: innenliegender Strömungskanal
- 11: verteilender Strömungskanal
- 12, 13, 14, 15: Strömungskanal entlang eines Eckbereichs
- 20, 21, 22, 23, 24, 25: entlang einer Seitenwand liegender Strömungskanal
- 30: Strömungslenker
- 31, 32: Strömungslenkende Stütze
- 40, 41: außenliegender Strömungskanal
- 100: Formteil
- 200: Formkontur
- 300: Innenkern
- 400: Formkernschaft
- VE: Richtungsvektor der Entformungsrichtung

## Patentansprüche

1. Nichtzylindrisch aufgebauter Formkern (1) zum Fertigen von Formteilen, der eine Innenform eines herzustellenden Formteils (100) bildet und im Bereich einer Kavität entlang der Innenform eines herzustellenden Formteils (100) eine Formkontur (200) aufweist umfassend wenigstens zwei in definiertem Winkel zueinander stehende Seitenwände und wenigstens einen Eckbereich, insbesondere im Spritzguss- oder Druckgussverfahren, umfassend Strömungskanäle zum Transport eines Temperiermittels, **gekennzeichnet dadurch, dass** das Temperiermittel über einen innenliegenden Strömungskanal (10), wenigstens einen verteilenden Strömungskanal (11) als Strömungsfläche der Formkontur (200) konturnah innerhalb des Endbereichs des Formkerns (1) und wenigstens einen Strömungskanal (12, 13, 14, 15, 20, 21, 22, 23) innerhalb der Formkontur (200) konturnah entlang eines der Eckbereiche und /oder einer der Seitenwände führbar ist.

2. Formkern (1) nach Anspruch 1, **gekennzeichnet dadurch, dass** die Zufuhr des Temperiermittels über wenigstens einen innenliegenden Strömungskanal (10) erfolgt, über wenigstens einen verteilenden Strömungskanal (11) als Strömungsfläche der Formkontur (200) innerhalb des Endbereichs des Formkerns (1) abgelenkt wird und im Inneren der Formkontur (200) über wenigstens einen Strömungskanal (20, 21, 22, 23, 24, 25) entlang wenigstens einer der Seitenwände und/oder über wenigstens einen Strömungskanal (12, 13, 14, 15) entlang eines Eckbereichs zurückgeführt wird.

3. Formkern (1) nach Anspruch 1, **gekennzeichnet dadurch, dass** die Zufuhr des Temperiermittels über wenigstens einen innenliegenden Strömungskanal (10) und/oder über wenigstens einen entlang wenigstens einer der Seitenwände liegenden Strömungskanal (20, 21, 22, 23, 24, 25) erfolgt, innerhalb des Endbereichs des Formkerns (1) über wenigstens einen verteilenden Strömungskanal (11) als Strömungsfläche der Formkontur (200) abgelenkt wird und über wenigstens einen Strömungskanal (12, 13, 14, 15) entlang wenigstens eines Eckbereichs zurückgeführt wird.

4. Formkern (1) nach Anspruch 1, **gekennzeichnet dadurch, dass** die Zufuhr des Temperiermittels über wenigstens einen innenliegenden Strömungskanal (10) und/oder wenigstens einen Strömungskanal (12, 13, 14, 15) entlang wenigstens eines Eckbereichs erfolgt, innerhalb des Endbereichs des Formkerns (1) über wenigstens einen verteilenden Strömungskanal (11) als Strömungsfläche der Formkontur (200) abgelenkt wird und über wenigstens einen entlang wenigstens einer der Seitenwände liegenden Strömungskanal (20, 21, 22, 23, 24, 25) zurückgeführt wird.

5. Formkern (1) nach Anspruch 1, **gekennzeichnet dadurch, dass** die Zufuhr des Temperiermittels über wenigstens einen Strömungskanal (12, 13, 14, 15) entlang wenigstens eines Eckbereichs und/oder über wenigstens einen entlang wenigstens einer der Seitenwände liegenden Strömungskanal (20, 21, 22, 23, 24, 25) erfolgt, innerhalb des Endbereichs des Formkerns (1) über wenigstens einen verteilenden Strömungskanal (11) als Strömungsfläche der Formkontur (200) abgelenkt wird und über wenigstens einen innenliegenden Strömungskanal (10) zurückgeführt wird.

6. Formkern (1) nach Anspruch 1, **gekennzeichnet dadurch, dass** die Zufuhr des Temperiermittels über wenigstens einen Strömungskanal (12, 13, 14, 15) entlang wenigstens eines Eckbereichs erfolgt, innerhalb des Endbereichs des Formkerns (1) über wenigstens einen verteilenden Strömungskanal (11) als Strömungsfläche der Formkontur (200) abgelenkt wird und über wenigstens einen innenliegenden Strömungskanal (10) und/oder über wenigstens einen entlang wenigstens einer der Seitenwände liegenden Strömungskanal (20, 21, 22, 23, 24, 25) zurückgeführt wird.

7. Formkern (1) nach Anspruch 1, **gekennzeichnet dadurch, dass** die Zufuhr des Temperiermittels über wenigstens einen entlang wenigstens einer der Seitenwände liegenden Strömungskanal (20, 21, 22, 23, 24, 25) erfolgt, innerhalb des Endbereichs des Formkerns (1) über wenigstens einen verteilenden Strömungskanal (11) als Strömungsfläche der Formkontur (200) abgelenkt wird und über wenigstens einen innenliegenden Strömungskanal (10) und/oder wenigstens einen Strömungskanal (12, 13, 14, 15) entlang wenigstens eines Eckbereichs zurückgeführt wird.

8. Formkern (1) nach einem der vorhergehenden Ansprüche, **gekennzeichnet dadurch, dass** Formkontur (200) im Bereich der Kavität wenigstens eine Kupferlegierung mit hoher Wärmeleitfähigkeit, korrosionsbeständigen Werkzeugstahl, gehärteten Werkzeugstahl, Ingenieurkeramik, Titan, Hartsilber oder kohlenstoffhaltiges Material umfasst.

9. Formkern (1) nach einem der vorhergehenden Ansprüche, **gekennzeichnet dadurch, dass** Komponenten unterschiedlicher oder gleicher Materialien durch Fügeverfahren gefügt sind.

10. Formkern (1) nach einem der vorhergehenden Ansprüche, **gekennzeichnet dadurch, dass** Formkontur (200) im Bereich der Kavität verschleißmindernde Oberflächenbeschichtung aufweist.

11. Formkern (1) nach einem der vorhergehenden Ansprüche, **gekennzeichnet dadurch, dass** der Innenkern (300) gehärtete Stahllegierung umfasst.

12. Formkern (1) nach einem der vorhergehenden Ansprüche, **gekennzeichnet dadurch, dass** der Formkernschaft (400) Werkzeugstahl umfasst.

13. Formkern (1) nach einem der vorhergehenden Ansprüche, **gekennzeichnet dadurch, dass** in wenigstens einem Strömungskanal Strömungslenker (30, 31, 32) angeordnet sind.

14. Formkern (1) nach einem der vorhergehenden Ansprüche, **gekennzeichnet dadurch, dass** der Formkern als Paket-Einheit ausgeführt ist, wobei mehrere genormte Paket-Einheiten parallel oder hintereinander anordenbar sind.

15. Verfahren zum Fertigen von Formteilen, insbesondere im Spritzguss- oder Druckgussverfahren **gekennzeichnet durch** die Verwendung eines Formkerns (1) gemäß einem der vorangehenden Ansprüche.

## Claims

1. Non-cylindrical mold core (1) for producing molded parts which forms an inner shape of a molded part (100) to be produced and has a mold contour (200) in the region of a cavity along the inner shape of a molded part (100) to be produced comprising at least two side walls at a defined angle to one another and at least one corner region, in particular in the injection molding or die casting process, comprising flow channels for transporting a temperature control medium, **characterized in that** the temperature control medium can be guided close to the contour along one of the corner regions and/or one of the side walls via an inner flow channel (10), at least one distributing flow channel (11) as a flow surface of the mold contour (200) close to the contour within the end region of the mold core (1), and at least one flow channel (12, 13, 14, 15, 20, 21, 22, 23) within the mold contour (200).

2. Mold core (1) according to claim 1, **characterized in that** the supply of the tempering medium takes place via at least one internal flow channel (10), is deflected via at least one distributing flow channel (11) as a flow surface of the mold contour (200) inside the end region of the mold core (1) and is returned inside the mold contour (200) via at least one flow channel (20, 21, 22, 23, 24, 25) along at least one of the side walls and/or via at least one flow channel (12, 13, 14, 15) along a corner region.

3. Mold core (1) according to claim 1, **characterized in that** the supply of the tempering medium takes place via at least one inner flow channel (10) and/or via at least one flow channel (20, 21, 22, 23, 24, 25) located along at least one of the side walls, is deflected within the end region of the mold core (1) via at least one distributing flow channel (11) as the flow surface of the mold contour (200), and is returned via at least one flow channel (12, 13, 14, 15) along at least one corner region.

4. Mold core (1) according to claim 1, **characterized in that** the supply of the tempering medium takes place via at least one inner flow channel (10) and/or at least one flow channel (12, 13, 14, 15) along at least one corner region, is deflected within the end region of the mold core (1) via at least one distributing flow channel (11) as the flow surface of the mold contour (200), and is returned via at least one flow channel (20, 21, 22, 23, 24, 25) located along at least one of the side walls.

5. Mold core (1) according to claim 1, **characterized in that** the supply of the tempering medium takes place via at least one flow channel (12, 13, 14, 15) along at least one corner region and/or via at least one flow channel (20, 21, 22, 23, 24, 25) located along at least one of the side walls, is deflected inside the end region of the mold core (1) via at least one distributing flow channel (11) as the flow surface of the mold contour (200), and is returned via at least one inner flow channel (10).

6. Mold core (1) according to claim 1, **characterized in that** the supply of the tempering medium takes place via at least one flow channel (12, 13, 14, 15) along at least one corner region, is deflected inside the end region of the mold core (1) via at least one distributing flow channel (11) as the flow surface of the mold contour (200), and is returned via at least one inner flow channel (10) and/or via at least one flow channel (20, 21, 22, 23, 24, 25) located along at least one of the side walls.

7. Mold core (1) according to claim 1, **characterized in that** the supply of the tempering medium takes place via at least one flow channel (20, 21, 22, 23, 24, 25) located along at least one of the side walls, is deflected inside the end region of the mold core (1) via at least one distributing flow channel (11) as the flow surface of the mold contour (200), and is returned via at least one inner flow channel (10) and/or at least one flow channel (12, 13, 14, 15) along at least one corner region.

8. Mold core (1) according to any one of the preceding claims, **characterized in that** mold contour (200) in the region of the cavity comprises at least a copper alloy with high thermal conductivity, corrosion-resistant tool steel, hardened tool steel, engineering ceramics, titanium, hard silver, or carbonaceous material.

9. Mold core (1) according to one of the preceding claims, **characterized in that** components of different or identical materials are joined by joining processes.

10. Mold core (1) according to one of the preceding claims, **characterized in that** mold contour (200) has wear-reducing surface coating in the region of the cavity.

11. Mold core (1) according to any one of the preceding claims, **characterized in that** the inner core (300) comprises hardened steel alloy.

12. Mold core (1) according to any one of the preceding claims, **characterized in that** the mold core shaft (400) comprises tool steel.

13. Mold core (1) according to one of the preceding claims, **characterized in that** flow deflectors (30, 31, 32) are arranged in at least one flow channel.

14. Formkern Mold core (1) according to one of the preceding claims, **characterized in that** the mold core is embodied as a package unit, wherein several standardized package units can be arranged in parallel or one behind the other.

15. Method for producing molded parts, in particular by injection molding process or die casting process, **characterized by** the use of a mold core (1) according to one of the preceding claims.

## Revendications

1. Noyau de moule (1) de conception non cylindrique pour la fabrication de pièces moulées, qui constitue une forme intérieure d'une pièce à mouler (100) et qui présente, au niveau d'une cavité, un contour de moule (200) le long de la forme intérieure d'une pièce à mouler (100), comprenant au moins deux parois latérales situées selon un angle défini l'une par rapport à l'autre et au moins une zone de coin, en particulier dans un procédé de coulée par injection ou de coulée sous pression, présentant des canaux d'écoulement pour le transport d'un agent de thermorégulation, **caractérisé en ce que** l'agent de thermorégulation peut être acheminé par au moins un canal d'écoulement interne (10), par au moins un canal d'écoulement de répartition (11) à titre de surface d'écoulement du contour de moule (200) à proximité du contour à l'intérieur de la zone d'extrémité du noyau de moule (1) et par au moins un canal d'écoulement (12, 13, 14, 15, 20, 21, 22, 23) à l'intérieur du contour de moule (200), à proximité du contour, le long de l'une des zones de coin et/ou de l'une des parois latérales.

2. Noyau de moule (1) selon la revendication 1, **caractérisé en ce que** l'alimentation en agent de thermorégulation s'effectue par au moins un canal d'écoulement intérieur (10), est déviée par au moins un canal d'écoulement de répartition (11) à titre de surface d'écoulement du contour de moule (200) à l'intérieur de la zone d'extrémité du noyau de moule (1), et est retournée à l'intérieur du contour de moule (200) par au moins un canal d'écoulement (20, 21, 22, 23, 24, 25) le long de l'une au moins des parois latérales et/ou par au moins un canal d'écoulement (12, 13, 14, 15) le long d'une zone de coin.

3. Noyau de moule (1) selon la revendication 1, **caractérisé en ce que** l'alimentation en agent de thermorégulation s'effectue par au moins un canal d'écoulement intérieur (10) et/ou par au moins un canal d'écoulement (20, 21, 22, 23, 24, 25) situé le long de l'une au moins des parois latérales, est déviée à l'intérieur de la zone d'extrémité du noyau de moule (1) par au moins un canal d'écoulement de répartition (11) à titre de surface d'écoulement du contour de moule (200), et est retournée par au moins un canal d'écoulement (12, 13, 14, 15) le long d'au moins une zone de coin.

4. Noyau de moule (1) selon la revendication 1, **caractérisé en ce que** l'alimentation en agent de thermorégulation s'effectue par au moins un canal d'écoulement intérieur (10) et/ou par au moins un canal d'écoulement (12, 13, 14, 15) le long d'au moins une zone de coin, est déviée à l'intérieur de la zone d'extrémité du noyau de moule (1) par au moins un canal d'écoulement de réparation (11) à titre de surface d'écoulement du contour de moule (200), et est retournée par au moins un canal d'écoulement (20, 21, 22, 23, 24, 25) situé le long de l'une au moins des parois latérales.

5. Noyau de moule (1) selon la revendication 1, **caractérisé en ce que** l'alimentation en agent de thermorégulation s'effectue par au moins un canal d'écoulement (12, 13, 14, 15) le long d'au moins une zone de coin et/ou par au moins un canal d'écoulement (20, 21, 22, 23, 24, 25) situé le long de l'une au moins des parois latérales, est déviée à l'intérieur de la zone d'extrémité du noyau de moule (1) par au moins un canal d'écoulement de répartition (11) à titre de surface d'écoulement du contour de moule (200), et est retournée par au moins un canal d'écoulement intérieur (10).

6. Noyau de moule (1) selon la revendication 1, **caractérisé en ce que** l'alimentation en agent de thermorégulation s'effectue par au moins un canal d'écoulement (12, 13, 14, 15) le long d'au moins une zone de coin, est déviée à l'intérieur de la zone d'extrémité du noyau de moule (1) par au moins un canal d'écoulement de répartition (11) à titre de surface d'écoulement du contour de moule (200), et est retournée par au moins un canal d'écoulement intérieur (10) et/ou par au moins un canal d'écoulement (20, 21, 22, 23, 24, 25) situé le long de l'une au moins des parois latérales.

7. Noyau de moule (1) selon la revendication 1, **caractérisé en ce que** l'alimentation en agent de thermorégulation s'effectue par au moins un canal d'écoulement (20, 21, 22, 23, 24, 25) situé le long de l'une au moins des parois latérales, est déviée à l'intérieur de la zone d'extrémité du noyau de moule (1) par au moins un canal d'écoulement de répartition (11) à titre de surface d'écoulement du contour de moule (200), et est retournée par au moins un canal d'écoulement intérieur (10) et/ou par au moins un canal d'écoulement (12, 13, 14, 15) le long d'au moins une zone de coin.

8. Noyau de moule (1) selon l'une des revendications précédentes, **caractérisé en ce que** dans la zone de la cavité, le contour de moule (200) contient au moins un alliage de cuivre à haute conductivité thermique, de l'acier à outils résistant à la corrosion, de l'acier à outils trempé, de la céramique technique, du titane, de l'argent dur ou un matériau carboné.

9. Noyau de moule (1) selon l'une des revendications précédentes, **caractérisé en ce que** des composants de matériaux différents ou identiques sont assemblés par un procédé d'assemblage.

10. Noyau de moule (1) selon l'une des revendications précédentes, **caractérisé en ce que** dans la zone de la cavité, le contour de moule (200) présente un revêtement de surface réduisant l'usure.

11. Noyau de moule (1) selon l'une des revendications précédentes, **caractérisé en ce que** le noyau intérieur (300) contient un alliage d'acier trempé.

12. Noyau de moule (1) selon l'une des revendications précédentes, **caractérisé en ce que** la tige de noyau de moule (400) contient de l'acier à outils.

13. Noyau de moule (1) selon l'une des revendications précédentes, **caractérisé en ce que** des guides d'écoulement (30, 31, 32) sont disposés dans au moins un canal d'écoulement.

14. Noyau de moule (1) selon l'une des revendications précédentes, **caractérisé en ce que** le noyau de moule est réalisé sous forme d'unité d'ensemble, plusieurs unités d'ensemble standardisées pouvant être disposées en parallèle ou les unes derrière les autres.

15. Procédé de fabrication de pièces moulées, en particulier dans un procédé de coulée par injection ou de coulée sous pression, par utilisation d'un noyau de moule (1) selon l'une des revendications précédentes.
